Europäisches Patentamt

European Patent Office

Office européen des brevets

(19)

(11) Veröffentlichungsnummer : **0 038 103
B1**

(12) # EUROPÄISCHE PATENTSCHRIFT

(45) Veröffentlichungstag der Patentschrift :
05.03.86

(21) Anmeldenummer : **81200411.7**

(22) Anmeldetag : **10.04.81**

(51) Int. Cl.⁴ : **B 23 B 31/12**

(54) **Schnellspannfutter.**

(30) Priorität : **11.04.80 DE 3014019**

(43) Veröffentlichungstag der Anmeldung :
**21.10.81 Patentblatt 81/42**

(45) Bekanntmachung des Hinweises auf die Patenterteilung : **05.03.86 Patentblatt 86/10**

(84) Benannte Vertragsstaaten :
**CH DE FR GB IT LI**

(56) Entgegenhaltungen :
**DE-A- 2 341 642
DE-B- 2 815 026
FR-A-   451 049
FR-A-   655 461**

(73) Patentinhaber : **HILTI Aktiengesellschaft**

**FL-9494 Schaan (LI)**

(72) Erfinder : **Wezel, Erich
In der Bitze 11
D-7443 Frickenhausen (DE)**

(74) Vertreter : **Wildi, Roland et al
Hilti Aktiengesellschaft Patentabteilung
FL-9494 Schaan (LI)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein handbetätigbares Spannfutter gemäß dem Oberbegriff des Anspruches 1.

Ein derartiges Spannfutter ist in der FR-A-451 049 beschrieben. Bei ihm haben die radial nach innen offenen Nuten der Spannhülse und die hierzu komplementären Rücken der Spannbacken kreisförmigen Querschnitt, wobei der Querschnitt der Nuten etwas mehr als der Hälfte der Kreisfläche entspricht, um die Spannbacken unverlierbar in der Nut zu halten. An der tiefsten Stelle der Nuten ist jeweils eine feine weitere Nut vorgesehen, in welcher eine Kugel angeordnet ist, die gleichzeitig in den Rücken der Spannbacke eingreift. Auf diese Weise sind die Spannbacken zwar gegen Verdrehung gesichert ; diese Art der Verdrehsicherung ist aber bei Ausüben größerer Drehmomente auf die Spannbacken mit dem Auftreten hoher lokaler Spannungen im Bereich der Sicherungskugeln verbunden.

Nachteilig ist an dem Spannfutter nach der FR-A-451 049 ferner, daß die Spannhülse zur Erzeugung der Spannbacken-Führungsnuten spanend bearbeitet werden muß, was hohe Fertigungskosten bedeutet.

Auch in der DE-A-23 41 642 ist ein von Hand betätigbares Spannfutter beschrieben, bei welchem die Spannbacken in hinterschnittenen Führungsnuten der Spannhülse geführt sind. Die Führungsnuten haben dort im wesentlichen T-förmigen Querschnitt, und entsprechend sind die Spannbacken mit T-förmigen Führungsabschnitten versehen. Auch ein derartiges Spannfutter läßt sich nur mit aufwendiger spanender Bearbeitung von Spannbacken und Spannhülse herstellen.

Es sind ferner Spannfutter bekannt, bei welchen die Führung der Spannbacken in einer schlitzartigen, kegelstumpfförmigen Spannhülse erfolgt, und bei denen sich die Spannbacken mit ihrer einen Kegelstumpfsektor bildenden Außenseite an und in komplementär ausgebildeten, konischen Aussparungen einer konzentrischen Außenhülse abstützen und bewegen. Aufgrund der kegelstumpfförmig ausgestalteten Außenseite der Spannbacken und der konisch ausgebildeten Führungsbahnen in der Außenhülse, die beide über ihre Längserstreckung abnehmende Radien aufweisen, ergibt sich, daß in Abhängigkeit von dem Durchmesser des zu spannenden Werkzeuges die Spannbacken sich günstigstenfalls über zwei Berührungslinien an der Außenhülse abstützen, und zwar für den Fall, daß das zu spannende Werkzeug einen kleinen Durchmesser aufweist. Sobald das zu spannende Werkzeug einen größeren Durchmesser hat, rücken die Berührungslinien immer näher zusammen, bis ab einem bestimmten Durchmesser die Spannbacken mit der Außenhülse nur noch eine Berührungslinie haben, so daß die Spannbacken bei Belastung des eingespannten Werkzeuges der Gefahr unterliegen, in der Führung der Außenhülse zu kippen, was zu einem Flattern des Werkzeuges verbunden mit Verringerung der Haltekraft des Spannfutters, und in ungünstigen Fällen nach Überwindung der Selbsthemmung zu einem Öffnen des Spannfutters führt.

Die ungenaue Führung der Spannbacken an und in der Außenhülse, die auch von der getrennten Innenhülse nicht verhindert werden kann, ergibt nicht auszugleichende und konstruktiv nicht zu beseitigende Toleranzen bei der Einspannung des Werkzeugs, und als Folge davon kann es unter wachsender Last zu einem Verkanten des Werkzeuges kommen, was schließlich zu einer Aufhebung der Selbsthemmung des Spannfutters und zum Öffnen führen kann, mit der Gefahr der Beschädigung des Werkzeugs, des Werkstücks und des Spannfutters selbst.

Zudem ist die Herstellung der konischen, zentrisch gestützten Innenhülse dieses bekannten Spannfutters, die nur spanend bearbeitet werden kann, zeitaufwendig und teuer.

Auch ist bereits ein Spannfutter bekanntgeworden, das vorzugsweise zur Verwendung unter starker Stoß- und Schlagbelastung in einer Handbohrmaschine geeignet sein soll. Es hat mindestens zwei, vorzugsweise drei sich auf im spitzen Winkel und symmetrisch zur Achse des Spannfutters angeordneten Gleitbahnen bewegenden Spannbacken, die von einer axial beweglichen Spannhülse vorzugsweise über ein elastisches Glied wie eine Tellerfeder auf den Gleitbahnen aufeinander zu verschoben werden. Die die Backen aufnehmenden Gleitbahnen sind bei diesem bekannten Spannfutter in einem zylindrischen Spannfutterkörper ausgebildet, der mit dem Aufnahmeschaft verbunden ist.

Nachteilig bei der Konstruktion dieses bekannten Spannfutters ist zum einen, daß eine automatische Nachspannung des Werkzeugs während des Einsatzes nicht gegeben ist, und zum anderen die Anlageflächen der Spannbacken in ihren Führungen umso kleiner wird, je größer der Durchmesser des einzuspannenden Werkzeuges und damit das in der Regel zu übertragende Drehmoment ist, so daß die Gefahr nicht von der Hand zu weisen ist, daß sich das Werkzeug, zumindest unter erschwerten Einsatzbedingungen, nach einiger Zeit im Spannfutter lockert, und da kein automatisches Nachspannen des Werkzeuges erfolgt, wiederum die Gefahr der Beschädigung des Werkzeuges, des zu bearbeitenden Werkstücks und des Spannfutters selbst besteht.

Durch die vorliegende Erfindung soll ein handbetätigbares Spannfutter geschaffen werden, bei welchem die Spannbacken auch beim harten Einsatz (z. B. Bohren in Stahl und anderen Metallen, Schlagbohren in Beton, Hammerbohren) zuverlässig gegen Verkippen gesichert sind, die Spannbacken eindeutig und spielfrei geführt sind und die Spannhülse ohne spanende Bearbeitung hergestellt werden kann. Gleichzeitig soll nach dem Einsatz ein leichtes Öffnen des Spannfutters von Hand möglich sein.

Diese Aufgabe ist erfindungsgemäß gelöst durch ein Spannfutter gemäß Anspruch 1.

In der FR-A-655 461 ist zwar eine Spannzange beschrieben, welche das Einspannen von Rundmaterial mit geringfügig von einem Solldurchmesser abweichendem Durchmesser gestattet und welche eine Spannhülse aufweist, die mit rechteckigen Querschnitt aufweisenden innenliegenden Führungsnuten versehen ist, in welchen keilförmige Spannbacken laufen. Die Tiefe der Führungsnuten ist aber beim einen Ende der Spannhülse sehr klein und wächst in axialer Richtung stetig an. Auf diese Weise können insbesondere die freien Enden der Spannbacken große Drehmomente nicht zuverlässig aufnehmen.

Bei dem erfindungsgemäßen Spannfutter ist dagegen der Querschnitt der Spannbacken-Führungsnuten vom einen Ende bis zum anderen Ende hin konstant.

Die direkte Führung der Spannbacken in der Spannhülse ergibt eine ständig großflächige Anlage der Spannbacken in den in der Spannhülse ausgebildeten Führungsbahnen, wobei die Seitenflächen der Führungsbahnen ein Kippen der Spannbacken auch dann sicher verhindern, wenn beim Schlagbohren wechselnde Drehmomente übertragen werden müssen. Das gefürchtete Flattern des Werkzeugs im Spannfutter, das oft zu einem unbeabsichtigten Lockern des Werkzeugs und Öffnen des Spannfutters führt, wird dadurch mit Sicherheit vermieden, zumal bei zunehmendem Schnittdruck die damit verbundene Erhöhung des zu übertragenden Drehmomentes zu einem selbsttätigen Nachspannen des Werkzeuges führt.

Dabei bleibt aufgrund der stabilen Flachführung der Spannbacken auch nach extremem Einsatz das leichte Wiederlösen des Werkzeugs aus dem Spannfutter von Hand gewährleistet.

Einzelheiten der Erfindung ergeben sich aus der nachstehend anhand von Ausführungsbeispielen im Zusammenhang mit den zugehörigen Zeichnungen erfolgenden Beschreibung sowie den Ansprüchen.

Von den Zeichnungen zeigt :

Figur 1 einen Längsschnitt eines ersten Ausführungsbeispiels eines Schnellspannfutters,

Figur 2 einen Längsschnitt eines zweiten Ausführungsbeispiels eines Schnellspannfutters,

Figur 3 einen Querschnitt der in Fig. 1 und 2 gezeigten Schnellspannfutter auf Höhe der Linie A-A,

Figur 4 eine Seitenansicht einer dritten Ausführungsform eines Schnellspannfutters, teilweise im Schnitt,

Figur 5 einen Querschnitt des in Fig. 4 gezeigten Schnellspannfutters auf Höhe der Linie B-B,

Figur 6 eine Draufsicht auf die Spannhülse von der Rückseite, und

Figur 7 eine Seitenansicht der Spannhülse, teilweise im Schnitt.

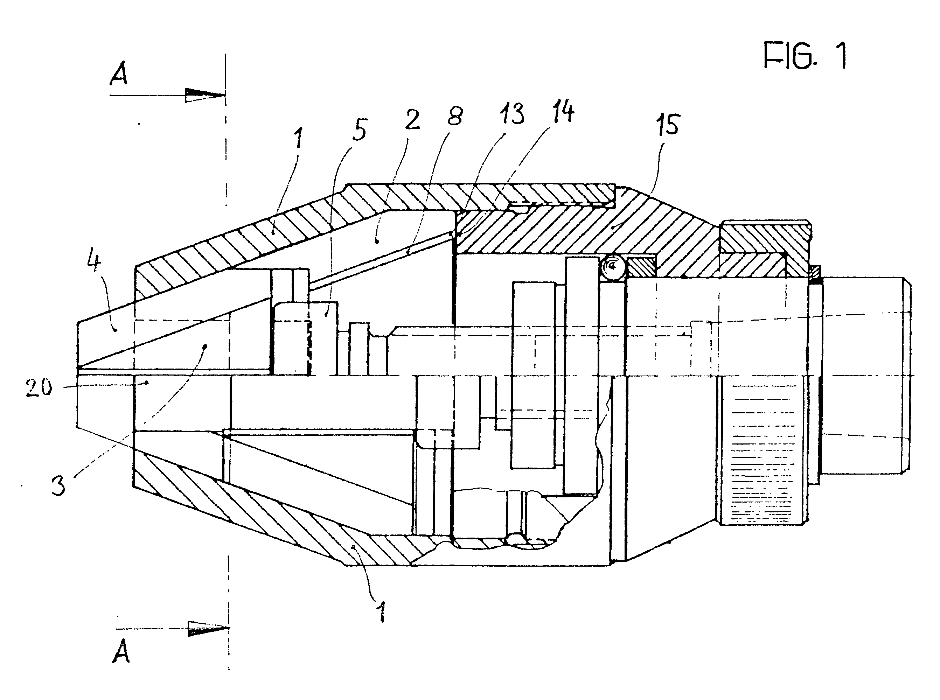

Das in Fig. 1 dargestellte Schnellspannfutter weist eine äußere Hülse 1 mit integrierten Führungsbahnen 2 auf, in denen Spannbacken 3 mit ihrem Schuh 4 geführt sind.

Die Spannbacken 3 werden mittels der Bewegungsspindel 5 in ihren Führungen 2 vor- und zurückbewegt.

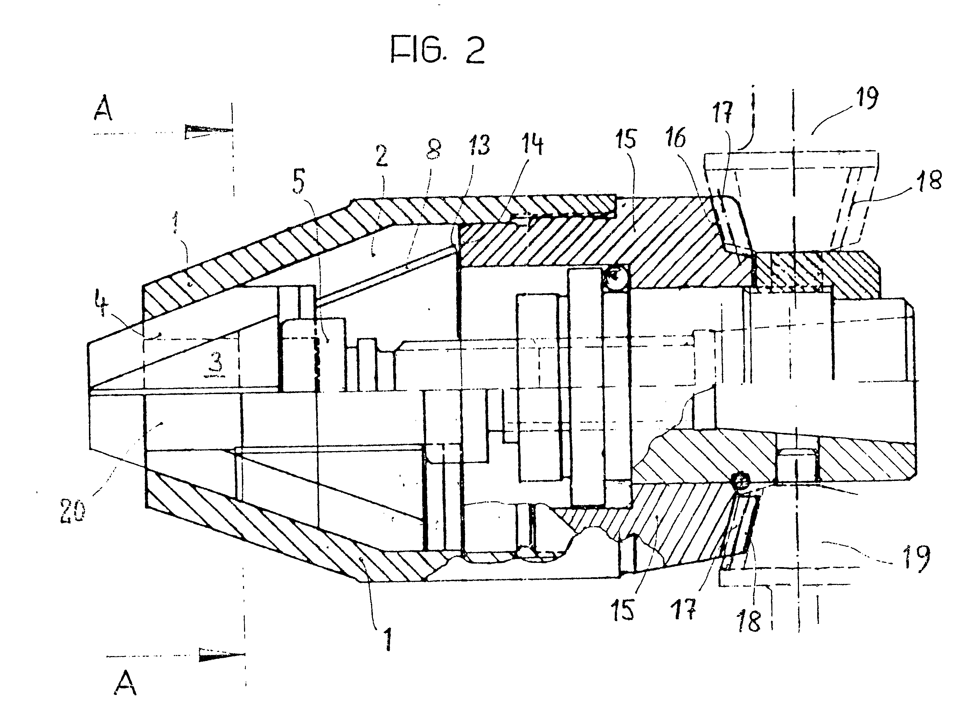

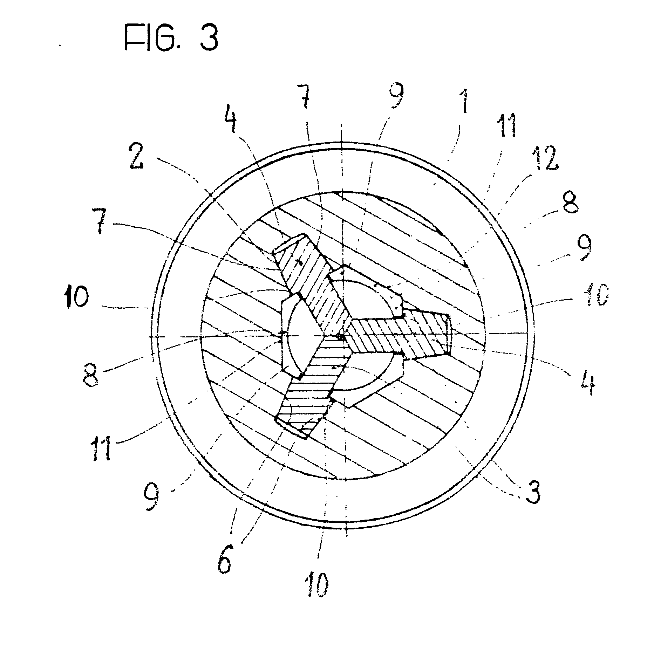

Bei den beiden in den Fig. 1 und 2 dargestellten Ausführungsbeispielen eines Schnellspannfutters weist die Führungsbahn 2 in der Außenhülse 1 den in Fig. 3 gezeigten trapezförmigen Querschnitt auf, der über die gesamte Länge der geradlinigen Führungsbahn konstant ist. Die beiden Innenführungsflächen 6 der in der Außenhülse 1 ausgebildeten Nut 2 und ebenso die beiden Außenflächen 7 des in dieser Nut gleitenden Schuhs 4 der Spannbacke 3 weisen einen Neigungswinkel im Bereich von ungefähr 5° auf.

Die Spannbacken 3 werden mit ihrem Schuh 4 mittels sektorförmiger Halteelemente 8, die sowohl starr als auch federnd ausgebildet sein können und die sich mit ihren freien Schenkeln 9 gegen die an dem Schuh 4 ausgebildeten Schultern 10 einerseits sowie mit ihrer Basis 11 an der Innenfläche 12 der Außenhülse 1 abstützen, in den Führungen 2 in Anlage gehalten. Weiterhin stützen sich die Halteelemente 8 mit ihrem hinteren Rand 13 an der Stirnfläche 14 der Gewindehülse 15 sowie mit ihrem vorderen Randbereich an der Außenseite der Bewegungsspindel 5 ab und sind auf diese Weise im Innern der Spannhülse 1 lagemäßig fixiert.

Die Führungsflächen 6 der Führungsbahn 2 und ebenso die komplementär ausgebildeten Führungsflächen 7 des Schuhs 4 der Spannbacke 3 weisen auf gleicher Höhe über die gesamte Erstreckung der Führungsbahn 2 in der Außenhülse 1 bzw. der Längserstreckung des Schuhs 4 der Spannbacke 3 konstante Abstände auf, so daß unabhängig von der Stellung der Spannbacke in der Führungsbahn 2 der Außenhülse 1 der gleiche Paßsitz gewährleistet ist.

Das zweite, in Fig. 2 dargestellte Ausführungsbeispiel eines Schnellspannfutters entspricht im wesentlichen dem im Zusammenhang mit Fig. 1 beschriebenen Ausführungsbeispiel, wobei in der Zeichnung für gleiche Teile gleiche Bezugszeichen verwendet werden.

Eine Abwandlung des Schnellspannfutters der in Verbindung mit Fig. 1 beschriebenen Ausführungsform liegt nur insoweit vor, als an der rückwärtigen Stirnfläche 16 der Gewindehülse 14 ein Zahnkranz 17 ausgebildet ist, mit dem die Verzahnung 18 eines Bohrfutterschlüssels 19 zum besonders festen Einspannen des Werkzeugs in bekannter Weise zusammenwirken kann. Der Bohrfutterschlüssel 19 ist dabei von handelsüblicher Art und Wirkungsweise und bedarf an dieser Stelle keiner weiteren Beschreibung.

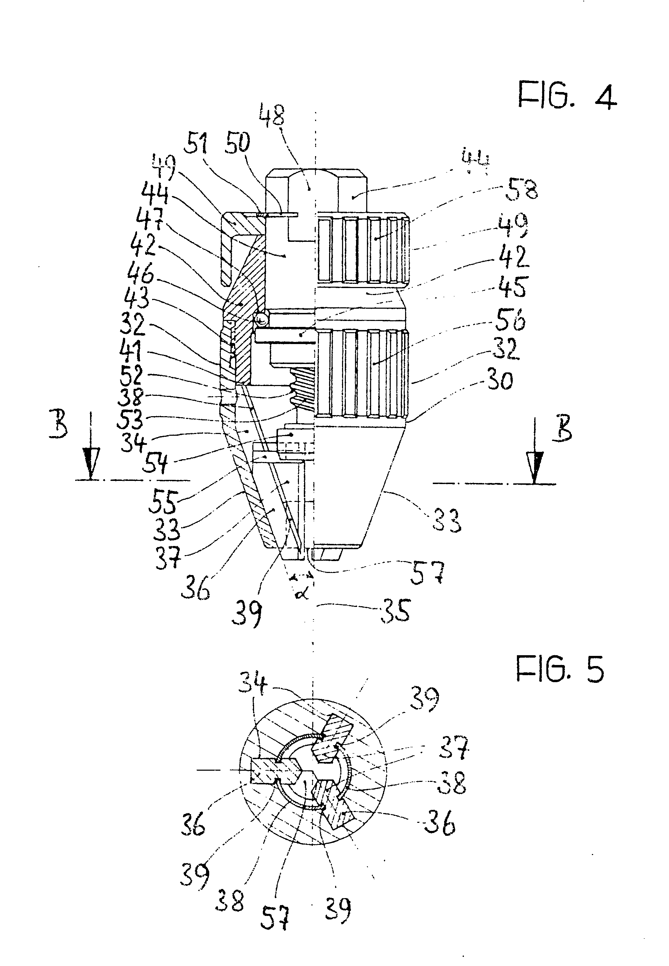

Bei der dritten, in den Fig. 4 bis 7 dargestellten, modifizierten Ausführungsform weist das Schnellspannfutter wiederum eine Spannhülse 30 mit einem hinteren Zylindermantelabschnitt 32 und einem sich daran anschließenden Kegelstumpfmantelabschnitt 33 auf. An der Innenseite dieses Kegelstumpfmantelabschnitts 33 sind drei, in einem Winkel von 120° gegeneinander versetzte, radial nach innen offene Führungsbahnen 34 mit rechteckigem Querschnitt ausgebildet. Die Führungsbahnen 34 verlaufen zu der Drehachse 35 des Schnellspannfutters in einem spitzen Winkel.

Die Führungsbahnen 34 nehmen je einen Schuh 36 einer Spannbacke 37 spielfrei und in Längsrichtung der Führungsbahn verschiebbar auf. Der Schuh 36 der Spannbacke 37 ist so ausgebildet, daß er unabhängig von seiner Spannlage in der Spannhülse 30 ständig allseitig in der Führung 34 anliegt, wozu Sicherungsbleche 38 in Form von kegelstumpfförmigen Mantelsegmenten vorgesehen sind, die in seitliche Nuten 39, die zu der Drehachse 35 des Schnellspannfutters den gleichen Winkel wie die Führungsbahnen 34 bilden, eingreifen und sich in diesen Nuten 39 abstützen.

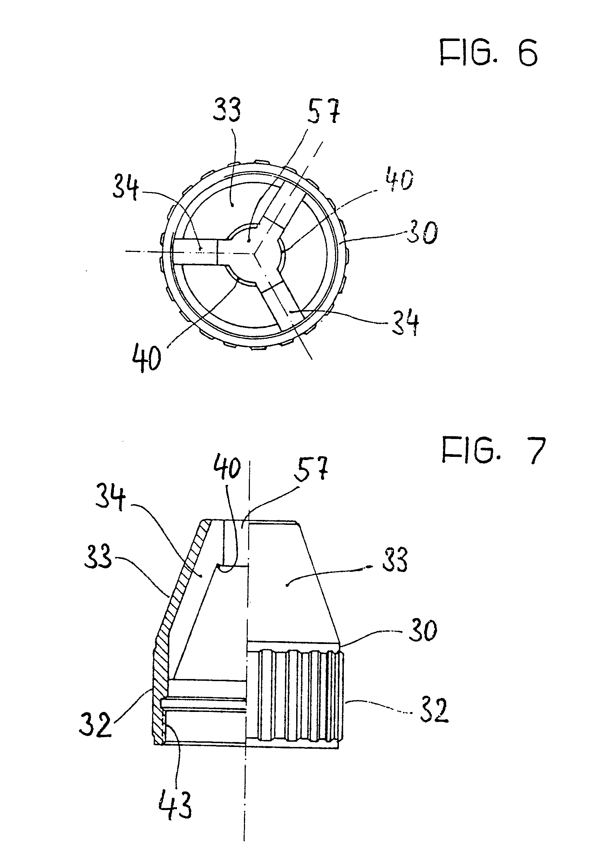

Mit ihrem vorderen Ende liegen die Sicherungsbleche 38 an einer radial nach innen vorspringenden und durch die Führungsbahnen 34 unterbrochenen, an der Vorderseite des Kegelstumpfmantelabschnitts 33 ausgebildeten Ringschulter 40 (vgl. Fig. 6 u. 7) an, während sie an ihrem anderen Ende durch den Kragen 41 einer Gewindehülse 42, die mit der Spannhülse 30 durch ein Gewinde 43 verschraubt ist, eingespannt und lagemäßig gesichert wird. In der Gewindehülse 42 ist der Aufnahmeschaft 44 drehbar gelagert. Der Aufnahmeschaft 44 besitzt an seinem innerhalb des Spannfutters gelegenen Ende eine Ringschulter 45, die sich über ein Kugellager 46 an einem nach innen ragenden Ringabsatz 47 der Gewindehülse 42 abstützt.

An seinem anderen, aus dem Spannfutter nach hinten herausgeführten Ende, weist der Aufnahmeschaft 44 zwei gegenüberliegende Anfasungen 48 auf, über die ein topfförmig gestaltetes Handrad 49 so drehfest befestigt ist, daß es mit seinem Rand teilweise über den hinteren Teil der Gewindehülse 42 greift.

Zur Befestigung ist die Basis des Handrades 49 mit einem konzentrischen, zu dem Abschnitt 48 komplementären Durchbruch versehen, durch den der Aufnahmeschaft 44 greift. In zusammengebautem Zustand liegt das Handrad 49 mit seiner Basis an dem hinteren Teil der Gewindehülse 42 an und stützt sich gleichzeitig an einem in einer in dem Aufnahmeschaft 44 ausgebildeten Ringnut 50 sitzenden Sicherungsring 51 ab, wodurch sowohl der Aufnahmeschaft 44 in der Gewindehülse 42 als auch das Handrad 49 bezüglich des Aufnahmeschaftes 44 axial festgelegt ist. In dem zwischen dem vorspringenden Rand des Handrades 49 und der Gewindehülse 42 ausgebildeten ringförmigen Raum kann eine (nicht dargestellte) Ringdichtung untergebracht werden, um ein Eindringen von Bohrklein sowohl in die Lagerstelle 46 als auch in das Gewinde 52 der Bewegungsspindel zu verhindern.

Der Aufnahmeschaft 44 ist an seinem innerhalb des Spannfutters gelegenen Ende mit einem Sackloch mit einem vorzugsweise linksgängigen Innengewinde versehen, in das das ebenfalls linksgängige, komplementäre Außengewinde 52 einer Bewegungsspindel 53 einschraubbar ist.

Die Bewegungsspindel weist einen drehfest mit ihr verbundenen Bewegungskopf 54 auf, der bei dem Ausführungsbeispiel drei radial verlaufende und um 120° gegeneinander versetzte Schwalbenschwanzführungen aufweist, in denen die Spannbacken 37 über seitliche, senkrecht zu der Drehachse 35 des Spannfutters verlaufende Nuten 55 radial verschiebbar zwangsgeführt sind.

Wird nun die Spannhülse 30 gegenüber dem Aufnahmeschaft 44 verdreht, so wird die durch die Spannbacken 37 und die Schwalbenschwanzführungen drehfest verbundene Bewegungsspindel 53 ihre axiale Lage gegenüber dem Aufnahmeschaft 44 und innerhalb des Spannfutters verändern, wobei die Spannbacken 37 entsprechend mitgenommen werden, so daß sie ihre Stellung in ihren Führungsbahnen 34 verändern und je nach Drehrichtung dabei aufeinander zu- oder voneinander weggeführt werden, wobei sie den Einspanndurchmesser entsprechend verändern.

Insbesondere aus Gründen einer rationalen Fertigung ist im zylindrischen Abschnitt 32 der Spannhülse 30 die Grifffläche als Längsriffelung 56 ausgebildet, die vorzugsweise im gleichen Formgebungsvorgang wie die übrige Spannhülse mit ihren Führungsbahnen 34 und der vorderen Öffnung 57 hergestellt wird.

Auch das Handrad 49 ist an seiner Außenseite mit einer Längsriffelung 58 als Grifffläche versehen, die wiederum während des Formgebungsvorgangs des Handrades mit ausgebildet wird.

## Patentansprüche

1. Handbetätigbares Schnellspannfutter zum kraftschlüssigen Einspannen eines Werkzeugs mittels mindestens zweier durch eine Bewegungsspindel (53) betätigbarer und in einer Spannhülse (1 ; 30) geführter Spannbacken (3 ; 36, 37), wobei Führungsbahnen (2 ; 34) für die Spannbacken (3 ; 36, 37) als radial nach innen offene, in einem spitzen Winkel zur Drehachse (35) und Aufnahmeöffnung des Spannfutters verlaufende Nuten (2 ; 34) ausgebildet sind, dadurch gekennzeichnet, daß die Spannhülse (1 ; 30) einschließlich der in ihr ausgeformten Nuten (2 ; 34) ohne Hinterschneidungen ausgebildet ist und daß die Nuten (2 ; 34) einen rechteckigen, dreieckigen oder trapezförmigen konstanten Querschnitt aufweisen, so, daß mit größer werdendem Einspanndurchmesser die flächige Anlage der Spannbacken (3 ; 36, 37) in der Spannhülse (1 ; 30) größer wird.

2. Spannfutter nach Anspruch 1, dadurch gekennzeichnet, daß der Verlauf der Materialstärke der Spannhülse (1 ; 30) in der Mantellinie sowohl in dem vorderen konischen Teil (30) als auch im hinteren zylindrischen Teil (32) im wesentlichen stetig ist.

3. Spannfutter nach Anspruch 1 oder 2, dadurch gekennzeichnet, daß die Spannbacken (3 ; 36. 37) durch Halteelemente (8 ; 38) in den Führungsbahnen (2 ; 34) in Anlage gehalten werden. welche in Umfangsrichtung verteilt jeweils zwischen benachbarten Spannbacken (3 ; 36. 37) im Inneren der Spannhülse (1 ; 30) lagemäßig fixiert sind.

4. Spannfutter nach Anspruch 3, dadurch gekennzeichnet, daß freie Schenkel der Halteelemente (8 ; 38) an Schultern (10 ; 39) der Spannbacken (3 ; 37) angreifen.

5. Spannfutter nach Anspruch 4, dadurch gekennzeichnet, daß die Halteelemente (38) kegelstumpfförmige Blechteile sind und ihre freien Schenkel in seitliche Nuten (39) der Spannbacken (3 ; 37) eingreifen und sich in diesen abstützen, welche zur Drehachse (35) des Spannfutters unter gleichem Winkel ($\alpha$) wie die Führungsbahnen (34) verlaufen.

## Claims

1. A hand-operable quick-action chuck for the force-locking clamping of a tool by means of at least two clamping jaws (3 ; 36, 37) which are operable by a movement shaft (53) and are guided in a clamping sleeve (1 ; 30), in which respect guideways (2 ; 34) for the clamping jaws (3 ; 36, 37) are fashioned as radially inwardly open grooves (2 ; 34) extending at an acute angle to the axis of rotation (35) and reception aperture of the chuck, characterised in that the clamping sleeve (1 ; 30) including the grooves (2 ; 34) formed in it is fashioned without undercuts and in that the grooves (2 ; 34) have a rectangular, triangular or trapezoidal constant cross-section, in such a way that with an enlarging clamping diameter the areal abutment of the clamping jaws (3 ; 36, 37) in the clamping sleeve (1 ; 30) becomes greater.

2. A chuck according to claim 1, characterised in that the course of the material thickness of the clamping sleeve (1 ; 30) in the surface line both in the front conical part (30) and in the rear cylindrical part (32) is substantially constant.

3. A chuck according to claim 1 or 2, characterised in that the clamping jaws (3 ; 36, 37) are held in abutment in the guideways (2 ; 34) by retaining elements (8 ; 38) which, distributed in the circumferential direction, are fixed positionwise in each case between neighbouring clamping jaws (3 ; 36, 37) in the interior of the clamping sleeve (1 ; 30).

4. A chuck according to claim 3, characterised in that free limbs of the retaining elements (8 ; 38) act on shoulders (10 ; 39) of the clamping jaws (3 ; 37).

5. A chuck according to claim 4, characterised in that the retaining elements (38) are frustoconical sheet-metal parts and their free limbs engage into lateral grooves (39) of the clamping jaws (3 ; 37) and are supported in these, which extend at the same angle ($\alpha$) to the axis of rotation (35) of the chuck as do the guideways (34).

## Revendications

1. Mandrin à serrage rapide, à commande manuelle, permettant de serrer, selon une liaison de force, un outil au moyen d'au moins deux mâchoires (3 ; 36, 37) pouvant être actionnées par une vis d'entraînement (53) et guidées dans un manchon de serrage (1 ; 30), des guides (2 ; 34) pour les mâchoires de serrage (3 ; 36, 37) étant réalisés sous la forme de rainures (2 ; 34) ouvertes radialement vers l'intérieur et faisant un angle aigu par rapport à l'axe de rotation (35) et par rapport à l'ouverture de réception du mandrin de serrage, caractérisé en ce que le manchon de serrage (1 ; 30), y compris les rainures (2 ; 34) qui sont ménagées dans ce manchon, est réalisé sans contre dépouille et que les rainures (2 ; 34) possèdent une section transversale constante rectangulaire, triangulaire ou trapézoïdale de sorte que, lorsque le diamètre de serrage augmente, l'application des mâchoires de serrage (3 ; 36, 37), qui s'effectue sur une certaine surface, dans le manchon de serrage (1 ; 30), devient plus importante.

2. Mandrin de serrage selon la revendication 1, caractérisé en ce que la variation de l'épaisseur du matériau du manchon de serrage (1 ; 30) au niveau de la génératrice est sensiblement continue aussi bien dans la partie avant conique (30) que dans la partie arrière cylindrique (32).

3. Mandrin de serrage selon la revendication 1 ou 2, caractérisé en ce que les mâchoires de serrage (3 ; 36, 37) sont maintenues en application dans les guides (2 ; 34) par des organes de maintien (8 ; 38) qui sont fixés en position à l'intérieur du manchon de serrage (1 ; 30) en étant répartis suivant la direction périphérique, respectivement entre des mâchoires de serrage (3 ; 36, 37) voisines.

4. Mandrin de serrage selon la revendication 3, caractérisé en ce que les branches libres des organes de maintien (8 ; 38) s'accrochent sur des épaulements (10 ; 39) des mâchoires de serrage (3 ; 37).

5. Mandrin de serrage suivant la revendication 4, caractérisé en ce que les organes de maintien (38) sont des éléments tronconiques en tôle et que leurs branches libres s'engagent dans des rainures latérales (39) des mâchoires de serrage (3 ; 39) et prennent appui dans ces mâchoires, qui font par rapport à l'axe de rotation (35) du mandrin de serrage le même angle ($\alpha$) que les guides (34).

FIG. 1

15

13 14

2 8

5

1

4

20

3

A

A

1

FIG. 2

FIG. 3

**FIG. 4**

**FIG. 5**

4

FIG. 6

FIG. 7